# EUROPEAN PATENT APPLICATION

(11) **EP 3 882 843 A1**
(43) Date of publication of application: **22.09.2021**
(21) Application number: 20164161.0
(22) Date of filing: 19.03.2020
(51) Int. Cl.: G06Q 30/02, G06Q 10/04, G06Q 10/10

(54) **DATA PROCESSING METHOD AND APPARATUS**

(71) Applicant: Mastercard International Incorporated, Purchase NY 10577 (US)
(72) Inventor: SADLIER, David Anthony, Dublin 16 (IE)
(74) Representative: D Young & Co LLP

(57) **Abstract**

A computer implemented data processing method comprising: receiving a plurality of pairs of values, each pair of values comprising a value of an independent variable and a value of a dependent variable; performing a plurality of linear regressions, each linear regression using a portion of the received pairs of values determined according to a different respective training window length to generate a further pair of values comprising a predetermined value of the independent variable and a value of the dependent variable; generating a predicted pair of values comprising the predetermined value of the independent variable and an average of the values of the dependent variable generated by each linear regression.

## Description

### BACKGROUND

### Field of the Disclosure

The present disclosure relates to a data processing method and apparatus.

### Description of the Related Art

This description of the related art is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present disclosure.

It is desirable to be able to predict unknown data from known data. For example, it is desirable to be able to predict demand for a certain product or service at a future time based on known demand in the past. This is known as forecasting.

One forecasting technique is linear regression. Linear regression models the relationship between an independent variable (e.g. time) and a dependent variable (e.g. demand for a certain product or service, as represented by a number of customer interactions or number of sales) as linear. Based on a plurality of known pairs of values of the independent variable and dependent variable (these are referred to as 'training points'), the relationship between the independent variable and dependent variable is approximated as linear. An unknown value of the dependent variable can then be predicted for any given value of the independent variable using this linear model.

In standard linear regression forecasting, there is an onus on the designer to manually indicate the number of training points (the 'training window length', TWL) to include in the data modelling (e.g. the 'start-date' in a date-based regression scenario in which the independent variable is dates in time). The resulting prediction accuracy can be very sensitive to the manual choice of TWL, especially when there is irregularity present in the data. Furthermore, increased robustness is typically offered by combinational modelling (i.e. forecasting based on combining the beliefs of multiple models). Whilst a wide-variety of combinational strategies are known, many are ad-hoc and/or do not generalise. That is, they are designed to work with a particular set of data and may not work well more generally for other sets of data. They are often also computationally intensive because of the need to perform a computationally intensive optimisation function to optimise the TWL (and therefore the prediction accuracy).

There is therefore a desire for a combinational linear regression technique that alleviates the need for manual selection of the TWL, that is applicable more generally to any data system where linear regression is an appropriate forecasting approach and which is less computationally intensive.

### SUMMARY

The present disclosure is defined by the claims.

### BRIEF DESCRIPTION OF THE DRAWINGS

Non-limiting embodiments and advantages of the present disclosure will be best understood by reference to the following detailed description taken in conjunction with the accompanying drawings, wherein:
Fig. 1 shows a data processing apparatus according to an embodiment;
Fig. 2 shows a graph showing example training data points and target data points;
Fig. 3 shows the graph of Fig. 2 with a linear regression using a TWL of 6 months;
Fig. 4 shows the graph of Fig. 2 with a linear regression using a TWL of 18 months;
Fig. 5 shows the graph of Fig. 2 with a plurality of linear regressions each using a different respective TWL;
Fig. 6 shows the graph of Fig. 5 with a plurality of predicted data points determined using a weighted average of data points predicted by each of the plurality of linear regressions; and
Fig. 7 shows a computer implemented data processing method according to an embodiment.

Like reference numerals designate identical or corresponding parts throughout the drawings.

### DETAILED DESCRIPTION OF THE EMBODIMENTS

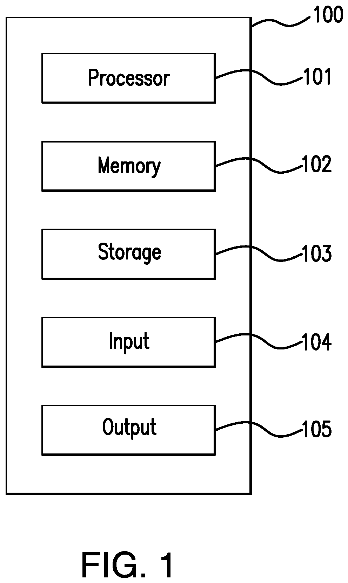

Fig. 1 shows a data processing apparatus 100 comprising a processor 101 for processing electronic instructions, a memory 102 for storing the electronic instructions to be processed and input and output data associated with the electronic instructions, a storage medium 104 (e.g. in the form of a hard disk drive, solid state drive or the like) for long term storage of data, an input interface 104 for receiving data (e.g. from a user via a suitable input device (not shown) such as a keyboard, mouse, touch screen or the like or from another data processing apparatus (not shown) over a network) and an output interface 105 for outputting data (e.g. to a user via a suitable output device (not shown) such as an electronic display or to another data processing apparatus (not shown) over a network). Each of the processor 101, memory 102, storage medium 103, input interface 104 and output interface 105 are implemented using appropriate circuitry, for example. The processor 101 controls the operation of each of the memory 102, storage medium 103, input interface 104 and output interface 105.

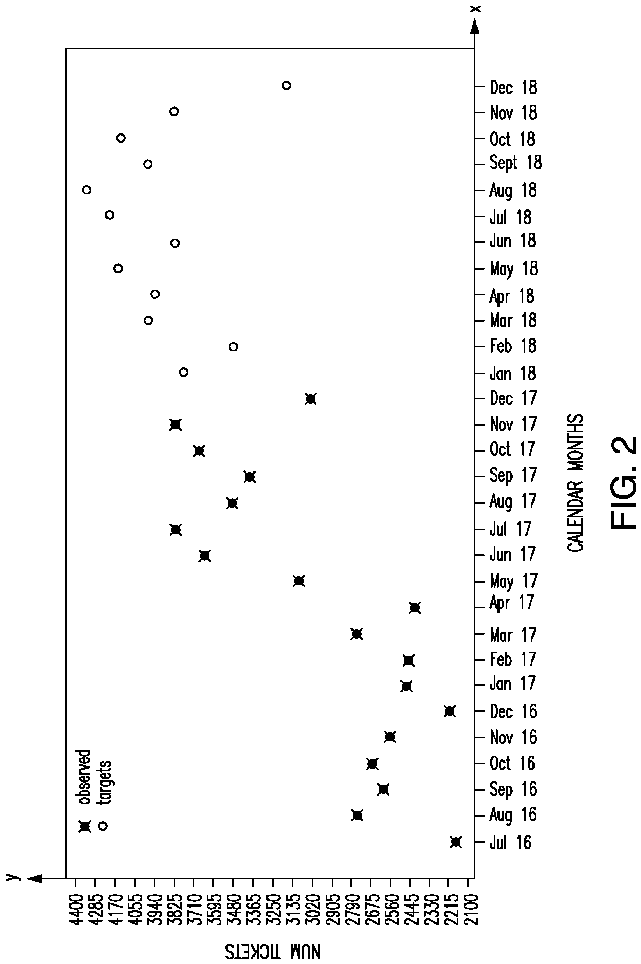

The data processing apparatus 100 is configured to perform combinational linear regression on a plurality of training points input to the input interface 104. Each training point comprises a pair of values comprising a value of an independent variable and a known value of a dependent variable associated with the value of the independent variable. The output of the combinational linear regression is a prediction of an unknown value of the dependent variable for a given value of the independent variable. This predicted value is output by the output interface 105. The combinational linear regression performed by the data processing apparatus 100 does not require manual selection of the TWL, is applicable more generally to any data system (that is, any set of independent and dependent variables) where linear regression is an appropriate forecasting approach and does not require a computationally intensive optimisation function to optimise the value of the TWL. The principles of the combinational linear regression are demonstrated by the graphs of Figs. 2 to 6.

Linear regression is realised by modelling linearity between the independent variable (explanatory variable) and the dependent variable and using the captured trend such that unseen dependent variable values can be predicted for any value of the independent variable.

Trends existing in data values (dependent variable) that are specified in terms of date (independent variable) are an example of data that can be modelled in this way, such that the data value at future date values can be forecasted.

However, one of the challenges of date-based linear regression concerns choosing the optimal number of past data points - i.e. the 'training window length' (TWL).

Choosing a TWL too long can render a forecasting model that is too slow in responding to shifts in trend. On the other hand, choosing a TWL too short can render a model that is too readily responsive to potentially noisy data points that do not represent the global pattern.

In short, sub-optimal choice of TWL can result in poor prediction accuracy.

The optimal TWL will depend on the characteristics of the data being modelled, and whilst effective rules-of-thumb might exist where domain knowledge (e.g. one or more known characteristics of the data which may indicate a suitable TWL) is available, there is no 'one-choice-fits-all' that is guaranteed to generalise well.

With the present technique, a combinational linear regression forecasting approach is proposed (and is particularly applicable to date-based data) that alleviates the need for TWL specification and, instead, relies on determinable characteristics of the data to determine the model parameters.

Fig. 2 shows some plotted data points relating to a dataset representing values of a dependent variable ('num tickets', e.g. representing a number of tickets sold) on the y-axis and values of a date-in-time independent variable (calendar months) on the x-axis.

The data is separated into 18 'observed' data points (Jul'16 - Dec'17) based on which the task is to accurately predict the values (y-axis position) of 12 'target' data points for the months Jan'18 - Dec'18.

Looking at the observed data points in isolation, it is evident that some degree of positive linearity exists for the relationship between increasing calendar month and 'num tickets'. That is, aside from some sporadic inconsistencies, the y-axis values increase as we traverse forward in time. Therefore, it is reasonable that a linear regression based forecasting model, trained on the observed data points, may play a valuable role in the task of predicting the positions of the target values.

However, what is the optimal training window length (TWL) such that prediction accuracy is maximal? Would it make sense to use all 18 observed data points available to us in training the model, or would that render a forecasting system that pays too much heed to out-of-date values?

Looking at the plot, it seems that there is a marked jump in the 'num tickets' value sometime around May/Jun'17. So, in this case, it is arguable that it might make sense to ignore date points preceding this time.

However, on the other hand, maybe this value shift corresponds to an irregularity, and the regression performance would be best served by not paying it too much attention.

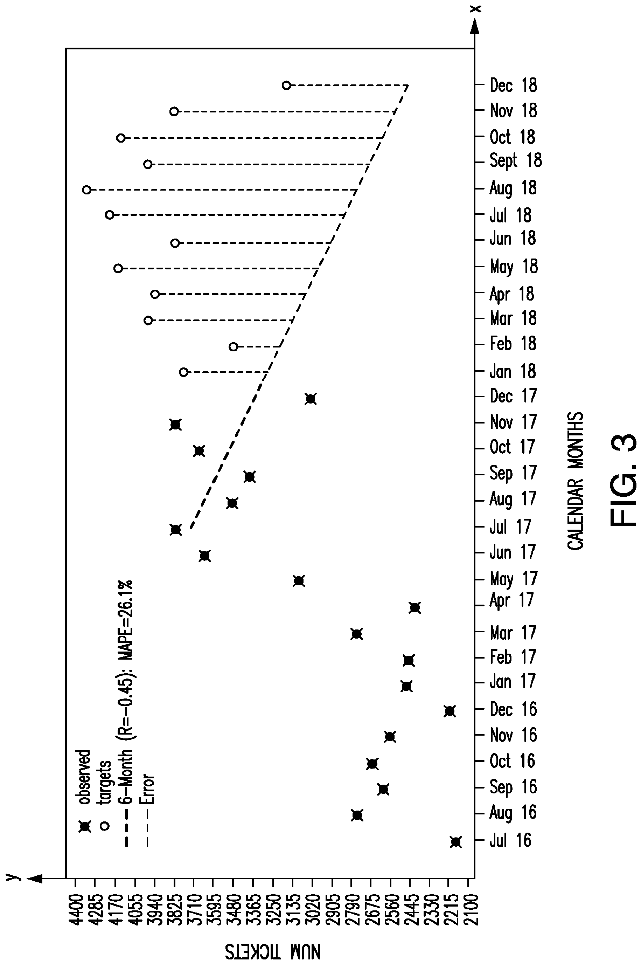

Fig. 3 presents the same scatter-plot, but now illustrates the forecasting behaviour based upon a 6-month TWL. Here, it is evident that the values of the six observed data points in question actually exhibit a degree of negative correlation with advancing month (with a correlation coefficient of R = -0.45). It is also evident that the resulting regression line does not capture the prevailing trend, with its trajectory actually deviating away from the vicinity of the targets. Hence, it seems a 6-month TWL would be a poor choice for this particular data set.

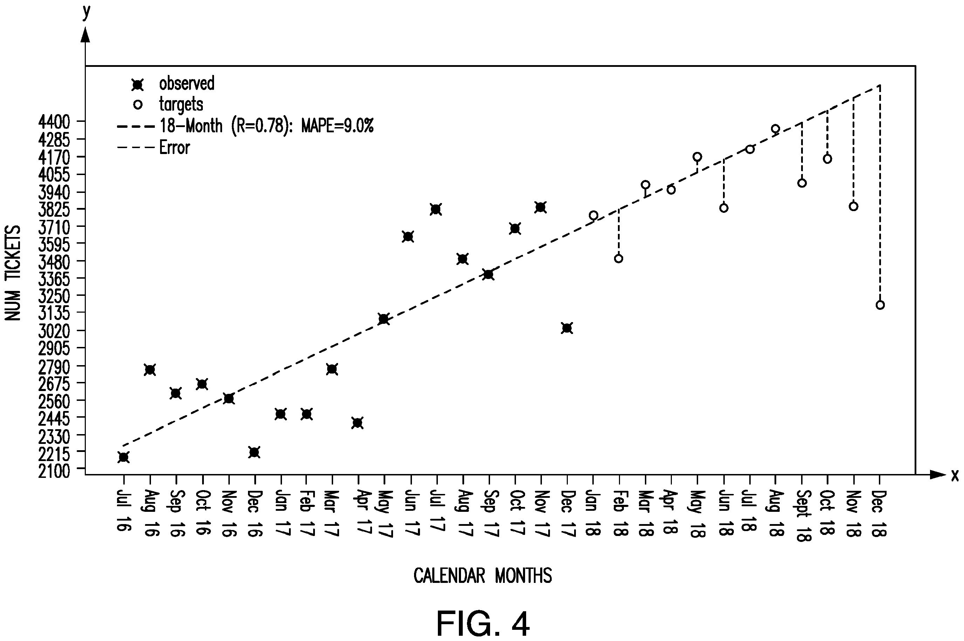

An alternative would be to incorporate all 18 observed data points into the regression modelling. The result of doing so is illustrated in Fig. 4.

Note that using too much historical data exposes the behaviour to the risk of not responding quickly enough to recent changes in the data. However, in this case, the mean-absolute-percentage-error (MAPE) has decreased from 26.1% in the 6-month TWL case to 9.0%. This is corroborated by observing that the derived regression line projects into the general vicinity of the target points much more closely than in the case of the 6-month TWL.

So, whilst we did experience some performance accuracy improvement in switching from a 6-month TWL to a 18-month TWL, might there be an intermediate, optimised TWL where the MAPE is minimal? Further trial-and-error may reveal this. However, this is computationally expensive (since, ultimately, every TWL must be tried, the MAPE for that TWL calculated and the MAPE of all TWLs compared to find the minimum MAPE). Furthermore, the optimised TWL would only be relevant to this particular data scenario. If the data is changed, the optimised TWL is unlikely to also apply to this new data set.

Alternatively, do the results of this experiment suggest that, if we go back even further than 18 months, we will experience an even greater accuracy increase? It would be unsound to presume so, as earlier data could easily reflect conditions that were considerably different to those that the current data window represents.

It is also noted that, whilst domain knowledge is valuable and should be exploited towards guiding appropriate TWL selection where possible, date-based data remains volatile. There therefore exists a motivation for improving upon the fixed choice approach.

This therefore demonstrates the challenge of TWL selection and the impact it can have on the prediction accuracy of linear regression.

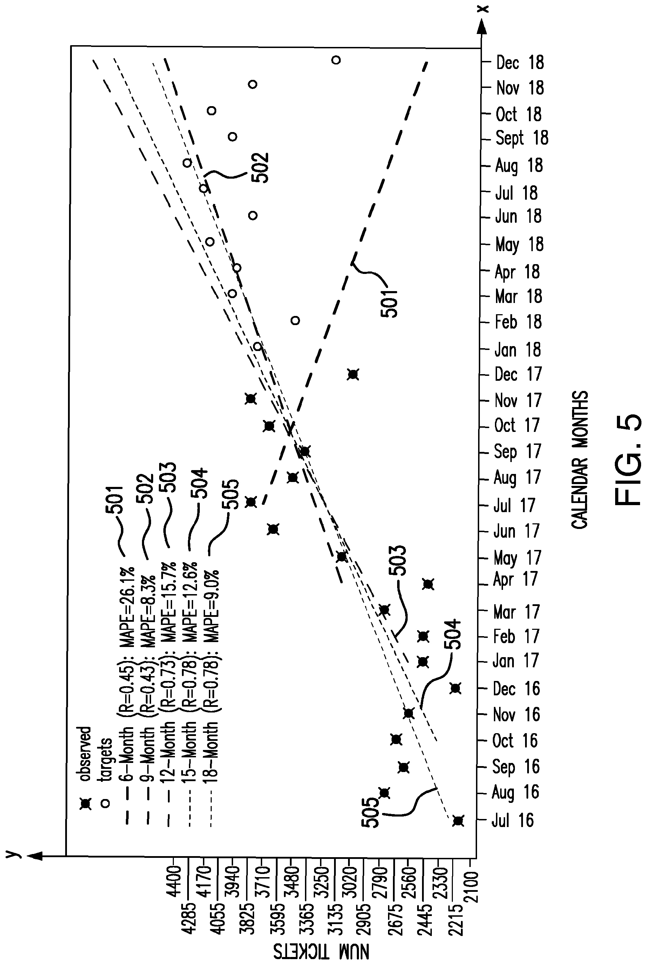

Fig. 5 presents the same observed and target data points as presented above, but this time showing the set of 5 fitted linear regression models that correspond to using 6-month 501, 9-month 502, 12-month 503, 15-month 504, and 18-month 505 TWLs. The associated mean-absolute-percentage error (MAPE) values of each are indicated (the lower the value, the better). The best performing model is the 9-month TWL (8.3% MAPE).

Whilst we might have been lucky enough to parameterize our forecasting system with a 9-month TWL, which, in terms of forecasting the 2018 target values, would have been optimal, there is no guarantee that this choice would be optimal for predictions beyond the forecasting time-frame currently being considered. The forecasting time frame is the time frame over which values of the dependent variable are predicted. The forecasting time frame is therefore Jan'18 to Dec'18 in this example.

Thus, instead of just using the best TWL for the given forecasting time frame, a better approach is to combine the 5 models such that they each contribute to the forecasting.

In an embodiment, each predicted value is the average of those output by each of the 5 models. That is, the predicted "num tickets" value for Jan'18 is the average of the individual Jan'18 predictions given by the models of 6-month TWL, 9-month TWL, 12-month TWL, 15-month TWL, and 18-month TWL. Similarly, the predicted "num tickets" value for Feb'18 is the average of the individual Feb'18 predictions given by the models of 6-month TWL, 9-month TWL, 12-month TWL, 15-month TWL, and 18-month TWL, and so on.

Doing this alleviates the need to specify a fixed TWL ahead of time and, because it is based on the average of a plurality of linear regression models with different TWLs (rather than relying on a single model with a single TWL which only happens to work well for a particular data set and a particular forecasting time frame), is more likely to generalise well to different data sets and different forecasting time frames. Each linear regression model is a linear regression associated with a particular TWL.

In an embodiment, the averaged prediction approach can be further improved upon by weighting the contribution of each model by its (absolute) correlation coefficient R. That is, since the R-value indicates the degree of correlation of the independent and dependent data values to which the regression line is fitted, basing the overall prediction on the combined R-weighted average of each individual model prediction will have the effect of weighing the outcome in favour of models that capture a greater degree of linearity (i.e. with R approaching +1 or -1) and against models fitted to data that is loosely correlated (i.e. with R approaching 0). The correlation coefficient of each model is calculated using the observed and predicted data points of each model.

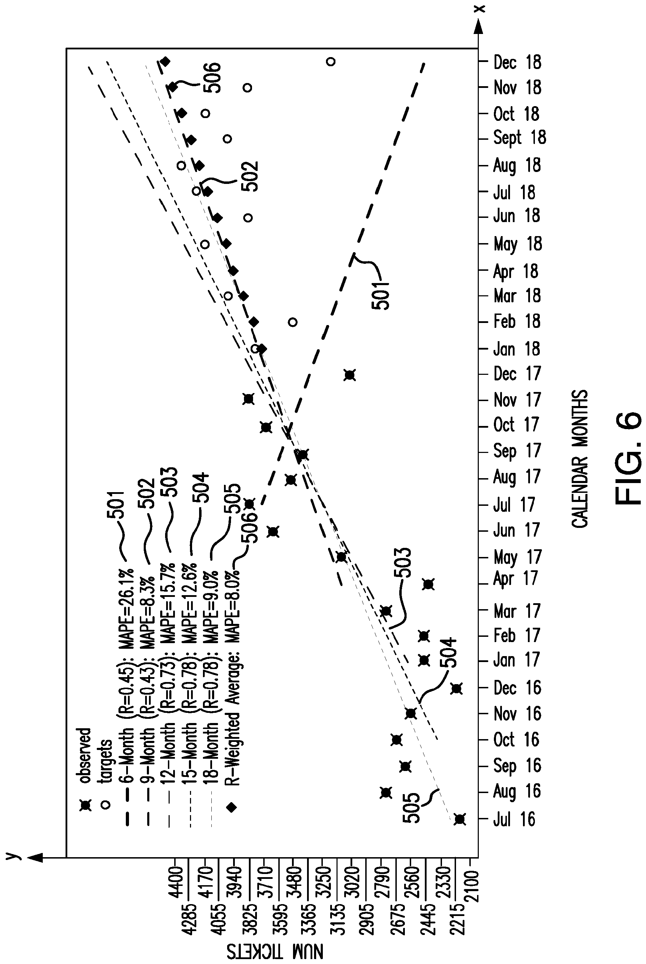

Fig. 6 is the same plot as Fig. 5, but now illustrates the positions of the R-weighted average predictions (diamond markers 506).

From this we can see that the R-weighted average predictions result in MAPE of 8.0%, which is a performance accuracy comparable to the best individually performing model (9-month TWL), but without the need to identify (and subsequently rely on) 9-months as being the best TWL (which may not be the case for different data sets and/or forecasting time frames).

The present technique therefore allows more accurate prediction using linear regression and is applicable generally to a wide variety of data sets and forecasting time-frames without the need for computationally intensive selection and optimisation of a TWL.

In embodiments, the linear regression for each TWL is carried out on the training points using any suitable known technique (e.g. least squares) and, if used, the correlation coefficient R for each linear regression model is calculated using any suitable know technique (e.g. it is calculated as the Pearson correlation coefficient).

Although the independent variable is calendar month and the dependent variable is "num tickets" in the mentioned embodiments, the present technique is applicable to any data set comprising an independent variable and a dependent variable for which linear regression is an appropriate prediction method. In particular, the independent variable may be time measured in any unit (e.g. years, quarters, months, weeks, days or hours) and the dependent variable may be a variable which varies with time in an approximately linear manner. In one example, the dependent variable represents demand of a growing product or service (e.g. as a number of customer interactions or number of sales per unit time).

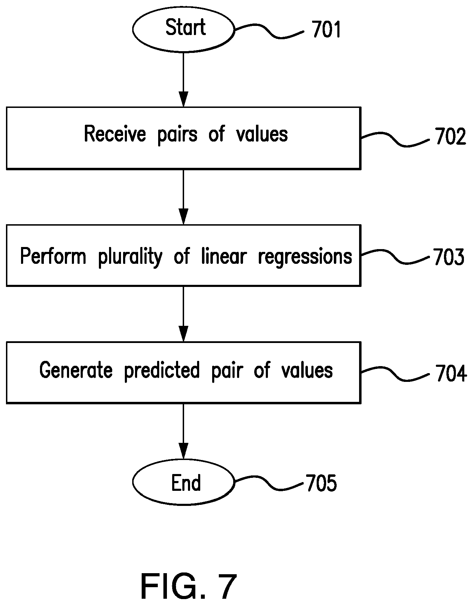

Fig. 7 shows a flow chart showing a computer implemented method carried out by the data processing apparatus 100. The method starts at step 701. At step 702, the input interface 104 receives a plurality of pairs of values (e.g. the "observed" training points in Figs. 2 to 6). Each pair of values comprises a value of an independent variable and a value of a dependent variable. At step 703, the processor 101 performs a plurality of linear regressions, each linear regression using a portion of the received pairs of values determined according to a different respective training window length, TWL, to generate a further pair of values (e.g. those on the lines 501 to 505 at a given time in the forecasting time-frame Jan'18 to Dec'18 in Figs. 5 and 6). Each further pair of values comprises a predetermined value of the independent variable and a value of the dependent variable. At step 704, the processor 101 generates a predicted pair of values (e.g. as indicated by a diamond marker in Fig. 6). The predicted pair of values comprises the predetermined value of the independent variable and an average of the values of the dependent variable generated by each linear regression. Optionally, the average of the values of the dependent variable generated by each linear regression is weighted according to the correlation coefficients of the linear regressions (e.g. according to a magnitude / absolute value of the correlation coefficients). The predicted pair of values is output by the output interface 105. The method ends at step 705.

Embodiments of the present technique are defined by the following numbered clauses:
1. A computer implemented data processing method comprising:
   receiving a plurality of pairs of values, each pair of values comprising a value of an independent variable and a value of a dependent variable;
   performing a plurality of linear regressions, each linear regression using a portion of the received pairs of values determined according to a different respective training window length to generate a further pair of values comprising a predetermined value of the independent variable and a value of the dependent variable;
   generating a predicted pair of values comprising the predetermined value of the independent variable and an average of the values of the dependent variable generated by each linear regression.
2. A method according to clause 1, comprising:
   determining, for each linear regression, a correlation coefficient of the plurality of pairs of values and the further pair of values generated by that linear regression;
   wherein the average of the values of the dependent variable generated by each linear regression is weighted according to the correlation coefficients.
3. A method according to any preceding clause, wherein the independent variable is time.
4. A method according to clause 3, wherein the dependent variable represents demand of a product or service.
5. A data processing apparatus comprising circuitry configured to:
   receive a plurality of pairs of values, each pair of values comprising a value of an independent variable and a value of a dependent variable;
   perform a plurality of linear regressions, each linear regression using a portion of the received pairs of values determined according to a different respective training window length to generate a further pair of values comprising a predetermined value of the independent variable and a value of the dependent variable;
   generate a predicted pair of values comprising the predetermined value of the independent variable and an average of the values of the dependent variable generated by each linear regression.
6. A program for controlling a computer to perform a method according to clause 1.
7. A non-transitory storage medium storing a program according to clause 6.

Numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

## Claims

1. A computer implemented data processing method comprising:
receiving a plurality of pairs of values, each pair of values comprising a value of an independent variable and a value of a dependent variable;
performing a plurality of linear regressions, each linear regression using a portion of the received pairs of values determined according to a different respective training window length to generate a further pair of values comprising a predetermined value of the independent variable and a value of the dependent variable;
generating a predicted pair of values comprising the predetermined value of the independent variable and an average of the values of the dependent variable generated by each linear regression.

2. A method according to claim 1, comprising:
determining, for each linear regression, a correlation coefficient of the plurality of pairs of values and the further pair of values generated by that linear regression;
wherein the average of the values of the dependent variable generated by each linear regression is weighted according to the correlation coefficients.

3. A method according to any preceding claim, wherein the independent variable is time.

4. A method according to claim 3, wherein the dependent variable represents demand of a product or service.

5. A data processing apparatus comprising circuitry configured to:
receive a plurality of pairs of values, each pair of values comprising a value of an independent variable and a value of a dependent variable;
perform a plurality of linear regressions, each linear regression using a portion of the received pairs of values determined according to a different respective training window length to generate a further pair of values comprising a predetermined value of the independent variable and a value of the dependent variable;
generate a predicted pair of values comprising the predetermined value of the independent variable and an average of the values of the dependent variable generated by each linear regression.

6. A program for controlling a computer to perform a method according to claim 1.

7. A non-transitory storage medium storing a program according to claim 6.
